# EUROPEAN PATENT APPLICATION

(11) **EP 4 394 994 A1**
(43) Date of publication of application: **03.07.2024**
(21) Application number: 21957000.9
(22) Date of filing: 14.09.2021
(51) Int. Cl.: H01M 10/0587, H01M 50/572

(54) **BATTERY CELL, BATTERY AND ELECTRICAL DEVICE**

(71) Applicant: Ningde Amperex Technology Limited, Ningde City, Fujian Province 352100 (CN)
(72) Inventor: KE, Zhaoqing, Ningde City, Fujian Province 352100 (CN)
(74) Representative: Icosa
(86) International application number: PCT/CN2021/118150
(87) International publication number: WO 2023/039706

(57) **Abstract**

This application discloses a battery cell, including an electrode assembly and a packaging bag accommodating the electrode assembly. The electrode assembly includes a positive electrode plate, a first separator, and a negative electrode plate wound together. The positive electrode plate includes a positive electrode current collector and a positive electrode active material layer applied to the positive electrode current collector. The negative electrode plate includes a negative electrode current collector and a negative electrode active material layer applied to the negative electrode current collector. A winding center of the electrode assembly points a direction outside the electrode assembly, an electrode plate with a periphery not covered by the positive electrode plate or the negative electrode plate is defined as an outermost electrode plate of the electrode assembly, and the outermost electrode plate includes a positive electrode plate and a negative electrode plate. This application further discloses a battery and an electric device including such battery cell. The foregoing battery cell has the advantages of high safety and high energy density.

## Description

### TECHNICAL FIELD

This application relates to the field of battery technologies, and in particular, to a battery cell, a battery, and an electric device.

### BACKGROUND

When a fully-charged battery cell is prone to abuse of a mechanical external force such as needle puncture, a short circuit is quite likely to occur. Heat generation at a short-circuit position is severe and the heat cannot be dissipated, causing thermal runaway of a cathode and an anode, thus resulting in combustion or explosion of the battery cell and affecting the safety performance of the battery cell. In the prior art, a double-layer bare foil region is typically disposed at the outermost circle of a battery cell, such that protection regions are formed at two opposite sides in a thickness direction of the battery cell. When the battery cell is prone to the foregoing abuse, a short circuit can preferentially occur in the protection region. However, the double-layer bare foil region provided at the outermost circle of the battery cell cannot have capacity performance, which results in low energy density of the battery cell.

### SUMMARY

In view of this, it is necessary to provide a battery cell featuring improved safety and energy density, and a battery and an electric device using such battery cell.

An embodiment of this application provides a battery cell, including an electrode assembly and a packaging bag accommodating the electrode assembly. The electrode assembly includes a positive electrode plate, a first separator, and a negative electrode plate wound together. The positive electrode plate includes a positive electrode current collector and a positive electrode active material layer applied to the positive electrode current collector. The negative electrode plate includes a negative electrode current collector and a negative electrode active material layer applied to the negative electrode current collector. A winding center of the electrode assembly points a direction outside the electrode assembly, an electrode plate with a periphery not covered by the positive electrode plate or the negative electrode plate is defined as an outermost electrode plate of the electrode assembly, and the outermost electrode plate includes a positive electrode plate and a negative electrode plate. The electrode assembly is of a wound structure.

This embodiment of this application includes the following technical effect: When the battery cell is prone to abuse of a mechanical external force such as needle puncture, a short circuit preferentially occurs to the positive electrode plate and the negative electrode plate in the outermost electrode plate. For example, a short circuit occurs to the positive electrode plate or the negative electrode plate in the outermost electrode plate and to a metal layer in the packaging bag, and the short-circuit position is in the outermost electrode plate of the battery cell rather than in the battery cell. This facilitates heat dissipation and avoids combustion or explosion of the battery cell, thus improving the safety of the battery cell. As compared with a protection structure of a double-layer bare foil region provided at the outermost circle in the prior art, the present invention reduces the use of a layer of bare foil region while improving the safety of the battery cell, thus increasing the energy density of the battery cell.

In some embodiments of this application, in a thickness direction of the electrode assembly, the electrode assembly includes a first main plane and a second main plane disposed opposite each other, the outermost positive electrode plate includes a first terminating end, the first terminating end is disposed on the first main plane, the outermost negative electrode plate includes a second terminating end, and the second terminating end is disposed on the second main plane. As the first terminating end and the second terminating end terminate on different side surfaces of the battery cell, when the first main plane and/or the second main plane is prone to abuse of a mechanical external force such as needle puncture, a short circuit preferentially occurs to the corresponding first terminating end and/or the second terminating end, so as to improve the safety of the first main plane and the second main plane of the battery cell.

In some embodiments of this application, the first terminating end includes a first segment and a second segment, and in a winding direction of the first terminating end, the second segment is disposed at an outer end of the first segment. The first segment is disposed on the second main plane, the second segment is wound to the first main plane after bypassing a corner of the battery cell, an inner side of a positive electrode current collector corresponding to the first segment is coated with the positive electrode active material layer, and a positive electrode current collector corresponding to the second segment is uncoated with the positive electrode active material layer. As the inner side of the positive electrode current collector corresponding to the first segment is coated with the positive electrode active material layer, the first segment and the negative electrode plate surrounded by it have capacity performance, thus increasing the energy density of the battery cell. Compared with the short circuit occurring between the positive electrode plate and the negative electrode plate, the short circuit occurring to the positive electrode current collector and/or the negative electrode current collector is relatively safe. Therefore, the positive electrode current collector corresponding to the second segment is uncoated with the positive electrode active material layer, such that the short circuit occurs to the positive electrode current collector when the battery cell is prone to abuse of a mechanical external force such as needle puncture, thus improving the safety of the battery cell.

In some embodiments of this application, an outer side of a negative electrode current collector corresponding to the second terminating end is uncoated with the negative electrode active material layer. Such arrangement allows a short circuit to occur to the negative electrode current collector at the outer circle of the second segment when the battery cell is prone to abuse of a mechanical external force such as needle puncture. In addition, the negative electrode current collector bypassing the corner of the battery cell allows for one more opportunity of a safe short circuit between the positive electrode current collector and the negative electrode current collector at the corner of the battery cell, thus improving the safety of the battery cell.

In some embodiments of this application, the battery cell further includes a second separator, and the second separator covers an end portion of the second terminating end. Such arrangement can improve the safety of the end portion of the second terminating end.

In some embodiments of this application, the battery cell further includes a positive electrode tab disposed on the positive electrode plate. The packaging bag includes a fusion layer, a metal layer, and a protective layer stacked sequentially. The fusion layer is disposed on an inner side surface of the metal layer and configured to be melted by heat to seal the packaging bag, and the protective layer is disposed on an outer side surface of the metal layer. The packaging bag is provided with a sealing portion, and the positive electrode tab is electrically connected to the metal layer and extends from the sealing portion. The fusion layer and the sealing portion improve the sealing performance of the packaging bag. The protective layer increases the structural strength of the packaging bag. When the battery cell is prone to abuse of a mechanical external force such as needle puncture, the positive electrode tab being electrically connected to the metal layer allows the short circuit to occur preferentially to the metal layer in the packaging bag and the positive electrode current collector. In addition, the short-circuit position is in the packaging bag at the outermost side of the battery cell rather than in the battery cell. This facilitates heat dissipation and avoids combustion or explosion of the battery cell, thus improving the safety of the battery cell.

In some embodiments of this application, the fusion layer in the sealing portion is provided with a through hole, and the positive electrode tab is electrically connected to the metal layer via the through hole. The battery cell further includes a tab adhesive layer for the positive electrode tab to penetrate through, and the tab adhesive layer is partially disposed in the sealing portion. The through hole improves the convenience of connection between the positive electrode tab and the metal layer. The tab adhesive layer is melted and combined with the fusion layer, which improves the sealing performance of the packaging bag.

In some embodiments of this application, the tab adhesive layer is provided with a melting portion corresponding to the through hole, the melting portion is configured to melt synchronously with the fusion layer, so as to expose the positive electrode tab in the melting portion, and the positive electrode tab runs through the through hole to be electrically connected to the metal layer. As the tab adhesive layer is melted and combined with the fusion layer and the melting portion melts synchronously with the fusion layer, the air tightness of the battery cell is improved. The exposed positive electrode tab being electrically connected to the metal layer via the through hole allows the short circuit to preferentially occur to the metal layer and the positive electrode current collector when the battery cell is prone to abuse of a mechanical external force such as needle puncture, thus improving the safety of the battery cell.

In some embodiments of this application, the tab adhesive layer is provided with a conductive portion corresponding to the through hole, and the conductive portion runs through the through hole and abuts against the metal layer to be electrically connected to the metal layer. The tab adhesive layer being melted and combined with the fusion layer improves the air tightness of the battery cell. As the conductive portion runs through the through hole and abuts against the metal layer, the positive electrode tab is electrically connected to the metal layer, allowing the short circuit to preferentially occur to the metal layer and the positive electrode current collector when the battery cell is prone to abuse of a mechanical external force such as needle puncture, thus improving the safety of the battery cell.

In some embodiments of this application, the tab adhesive layer is a conductive adhesive layer, and a portion of the tab adhesive layer corresponding to the through hole runs through the through hole and abuts against the metal layer to be electrically connected to the metal layer. The tab adhesive layer being melted and combined with the fusion layer improves the air tightness of the battery cell. The tab adhesive layer made of a conductive adhesive enables the positive electrode tab to be electrically connected to the metal layer, allowing the short circuit to preferentially occur to the metal layer and the positive electrode current collector when the battery cell is prone to abuse of a mechanical external force such as needle puncture, thus improving the safety of the battery cell.

In some embodiments of this application, the battery cell further includes a conductive member, the protective layer is provided with a depression exposing the metal layer, an end of the conductive member is electrically connected to the metal layer at the depression, and a second end of the conductive member is electrically connected to the positive electrode tab outside the packaging bag. As the conductive member is electrically connected to both the positive electrode tab and the metal layer, the positive electrode tab is electrically connected to the metal layer, allowing the short circuit to preferentially occur to the metal layer and the positive electrode current collector when the battery cell is prone to abuse of a mechanical external force such as needle puncture, thus improving the safety of the battery cell.

An embodiment of this application provides a battery, including a housing, where the battery further includes any one of the foregoing battery cells, and the battery cell is disposed in the housing.

Some embodiments of this application include the following technical effect: When the battery cell in a battery is prone to abuse of a mechanical external force such as needle puncture, a short circuit preferentially occurs to the positive electrode plate and the negative electrode plate in the outermost electrode plate. For example, a short circuit occurs to the positive electrode plate or the negative electrode plate in the outermost electrode plate and to the metal layer in the packaging bag, and the short-circuit position is in the outermost electrode plate of the battery cell rather than in the battery cell. This facilitates heat dissipation and avoids combustion or explosion of the battery cell, thus improving the safety of the battery.

An embodiment of this application provides an electric device, including the foregoing battery.

Some embodiments of this application include the following technical effect: When the battery in an electric device is prone to abuse of a mechanical external force such as needle puncture, a short circuit preferentially occurs to the positive electrode plate and the negative electrode plate in the outermost electrode plate. For example, a short circuit occurs to the positive electrode plate or the negative electrode plate in the outermost electrode plate and to the metal layer in the packaging bag, and the short-circuit position is in the outermost electrode plate of the battery cell rather than in the battery cell. This facilitates heat dissipation and avoids combustion or explosion of the battery cell, thus improving the safety of the electric device.

In the battery cell, the battery, and the electric device provided in some embodiments of this application, when the battery cell is prone to abuse of a mechanical external force such as needle puncture, a short circuit preferentially occurs to the positive electrode plate and the negative electrode plate in the outermost electrode plate. For example, a short circuit occurs to the positive electrode plate or the negative electrode plate in the outermost electrode plate and to the metal layer in the packaging bag, and the short-circuit position is in the outermost electrode plate of the battery cell rather than in the battery cell. This facilitates heat dissipation and avoids combustion or explosion of the battery cell, thus improving the safety of the battery cell. As compared with a protection structure of a double-layer bare foil region provided at the outermost circle in the prior art, the present invention reduces the use of a layer of bare foil region while improving the safety of the battery cell, thus increasing the energy density of the battery cell.

### BRIEF DESCRIPTION OF DRAWINGS

FIG. 1 is a first schematic structural top view of a battery cell according to an embodiment of this application.
FIG. 2 is a first enlarged schematic diagram of a partial structure of a battery cell according to an embodiment of this application.
FIG. 3 is a first schematic structural side view of a battery cell according to an embodiment of this application.
FIG. 4 is a first schematic structural diagram of a positive electrode tab in a battery cell and a packaging bag being connected according to an embodiment of this application.
FIG. 5 is a second schematic structural diagram of a positive electrode tab in a battery cell and a packaging bag being connected according to an embodiment of this application.
FIG. 6 is a third schematic structural diagram of a positive electrode tab in a battery cell and a packaging bag being connected according to an embodiment of this application.
FIG. 7 is a fourth schematic structural diagram of a positive electrode tab in a battery cell and a packaging bag being connected according to an embodiment of this application.
FIG. 8 is a second schematic structural top view of a battery cell according to an embodiment of this application.
FIG. 9 is a second enlarged schematic diagram of a partial structure of a battery cell according to an embodiment of this application.
FIG. 10 is a second schematic structural side view of a battery cell according to an embodiment of this application.
FIG. 11 is a third schematic structural top view of a battery cell according to an embodiment of this application.
FIG. 12 is a third enlarged schematic diagram of a partial structure of a battery cell according to an embodiment of this application.
FIG. 13 is a third schematic structural side view of a battery cell according to an embodiment of this application.

Reference signs of main components:

| | |
|---|---|
| Battery cell | 100 |
| Electrode assembly | 10 |
| Winding center | 10a |
| Outermost electrode plate | 10b |
| First main plane | 11 |
| Second main plane | 12 |
| Positive electrode plate | 20 |
| Positive electrode current collector | 21 |
| First surface | 21a |
| Second surface | 21b |
| Positive electrode active material layer | 22 |
| First terminating end | 23 |
| First segment | 231 |
| Second segment | 232 |
| Positive electrode tab | 24 |
| Negative electrode plate | 30 |
| Negative electrode current collector | 31 |
| Third surface | 31a |
| Fourth surface | 31b |
| Negative electrode active material layer | 32 |
| Second terminating end | 33 |
| Negative electrode tab | 34 |
| First separator | 40 |
| Second separator | 45 |
| Packaging bag | 50 |
| Sealing portion | 50a |
| Metal layer | 51 |
| Fusion layer | 52 |
| Protective layer | 53 |
| Through hole | 54 |
| Depression | 55 |
| Conductive member | 60 |
| Sleeve groove | 61 |
| Tab adhesive layer | 70, 70a, 70b, 70c |
| Melting portion | 71 |
| Conductive portion | 72 |

### DESCRIPTION OF EMBODIMENTS

The following describes the technical solutions in the embodiments of this application with reference to the accompanying drawings in the embodiments of this application. Apparently, the described embodiments are only some rather than all of the embodiments of this application.

It should be noted that, when one component is deemed as being "connected to" another component, it can be directly connected to the another component, or there can be a component in between. When one component is deemed as being "disposed on" another component, it can be directly disposed on the another component, or there can be a component in between. The terms "top", "bottom", "upper", "lower", "left", "right", "front", "rear", and other similar expressions as used herein are for illustration only.

Unless otherwise defined, all technical and scientific terms used herein shall have the same meanings as commonly understood by those skilled in the art to which this application pertains. The terms used herein in the specification of this application are for description of specific embodiments only without any intention to limit this application.

An embodiment of this application provides a battery cell, including an electrode assembly and a packaging bag accommodating the electrode assembly. The electrode assembly includes a positive electrode plate, a first separator, and a negative electrode plate, the positive electrode plate, the first separator, and the negative electrode plate being wound. The positive electrode plate includes a positive electrode current collector and a positive electrode active material layer applied to the positive electrode current collector. The negative electrode plate includes a negative electrode current collector and a negative electrode active material layer applied to the negative electrode current collector. A winding center of the electrode assembly points a direction outside the electrode assembly, an electrode plate with a periphery not covered by the positive electrode plate or the negative electrode plate is defined as an outermost electrode plate of the electrode assembly, and the outermost electrode plate includes a positive electrode plate and a negative electrode plate.

An embodiment of this application provides a battery, including a housing, where the battery further includes any one of the foregoing battery cells, and the battery cell is disposed in the housing.

Another embodiment of this application provides an electric device, including the foregoing battery.

In the battery cell, the battery, and the electric device provided in some embodiments of this application, when the battery cell is prone to abuse of a mechanical external force such as needle puncture, a short circuit preferentially occurs to the positive electrode plate and the negative electrode plate in the outermost electrode plate. For example, a short circuit occurs to the positive electrode plate or the negative electrode plate in the outermost electrode plate and to the metal layer in the packaging bag, and the short-circuit position is in the outermost electrode plate of the battery cell rather than in the battery cell. This facilitates heat dissipation and avoids combustion or explosion of the battery cell, thus improving the safety of the battery cell. As compared with a protection structure of a double-layer bare foil region provided at the outermost circle in the prior art, the present invention reduces the use of a layer of bare foil region while improving the safety of the battery cell, thus increasing the energy density of the battery cell.

The following describes in detail some embodiments with reference to the accompanying drawings. In absence of conflicts, the following embodiments and features in the embodiments may be combined.

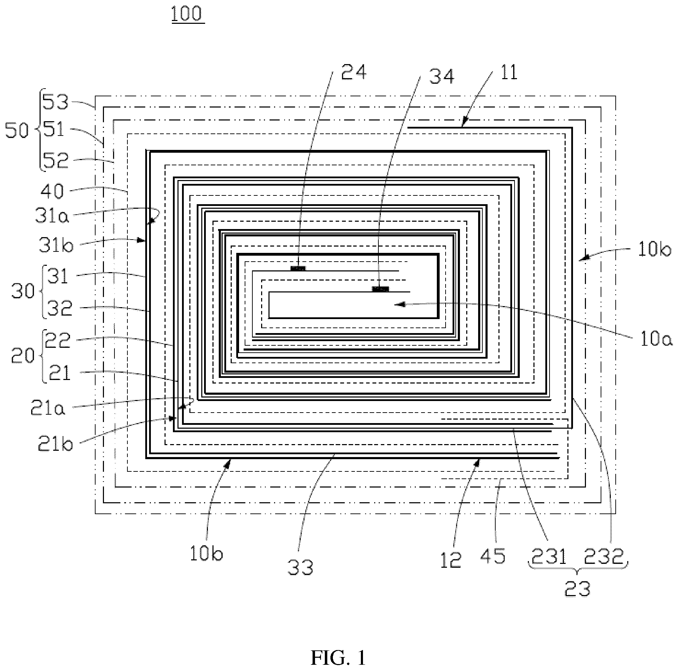

Referring to FIGs. 1, 2, and 3, a battery cell 100 in this embodiment includes an electrode assembly 10 and a packaging bag 50 accommodating the electrode assembly 10. The electrode assembly 10 includes a positive electrode plate 20 and a negative electrode plate 30 that are wound as well as a first separator 40 disposed between the positive electrode plate 20 and the negative electrode plate 30. The positive electrode plate 20 includes a positive electrode current collector 21 and a positive electrode active material layer 22 applied to the positive electrode current collector 21. The negative electrode plate 30 includes a negative electrode current collector 31 and a negative electrode active material layer 32 applied to the negative electrode current collector 31.

The positive electrode current collector 21 includes a first surface 21a and a second surface 21b opposite each other in a thickness direction of the positive electrode current collector 21, where the first surface 21a and/or the second surface 21b is coated with the positive electrode active material layer 22. The first surface 21a faces a winding center 10a, and the second surface 21b is back away from the winding center 10a. The first surface 21a is defined as the inner side of the positive electrode current collector 21, and the second surface 21b is defined as the outer side of the positive electrode current collector 21. The negative electrode current collector 31 includes a third surface 31a and a fourth surface 31b opposite each other in a thickness direction of the negative electrode current collector 31, where the third surface 31a and/or the fourth surface 31b is coated with the negative electrode active material layer 32. The third surface 31a faces the winding center 10a, and the fourth surface 31b is back away from the winding center 10a. The third surface 31a is defined as the inner side of the negative electrode current collector 31, and the fourth surface 31b is defined as the outer side of the negative electrode current collector 31.

Referring to FIG. 1, a winding center 10a of the electrode assembly 10 points a direction outside the electrode assembly 10, an electrode plate with a periphery not covered by the positive electrode plate 20 or the negative electrode plate 30 is defined as an outermost electrode plate 10b of the electrode assembly 10, and the outermost electrode plate 10b includes a positive electrode plate 20 and a negative electrode plate 30. When the battery cell 100 is prone to abuse of a mechanical external force such as needle puncture, a short circuit preferentially occurs to the positive electrode plate 20 and the negative electrode plate 30 in the outermost electrode plate 10b. For example, a short circuit occurs to the positive electrode plate 20 or the negative electrode plate 30 in the outermost electrode plate 10b and an electrode plate at the inner circle of the outermost electrode plate 10b, or a short circuit occurs to the positive electrode plate 20 or the negative electrode plate 30 in the outermost electrode plate 10b and the metal layer in the packaging bag 50. In addition, the short-circuit position is in the outermost electrode plate 10b of the battery cell 100 rather than in the battery cell 100, which facilitates heat dissipation and avoids combustion or explosion of the battery cell 100, thus improving the safety of the battery cell 100.

As compared with a protection structure of a double-layer bare foil region provided at the outermost circle in the prior art, a short circuit preferentially occurs to the positive electrode plate 20 and the negative electrode plate 30 that are included in the outermost electrode plate 10b, which reduces the use of a layer of bare foil region while improving the safety of the battery cell 100, thus increasing the energy density of the battery cell 100.

Referring to FIG. 1, in some embodiments, in a thickness direction of the electrode assembly 10, the electrode assembly 10 includes a first main plane 11 and a second main plane 12 disposed opposite each other. The outermost positive electrode plate 20 includes a first terminating end 23, the first terminating end 23 being disposed on the first main plane 11. The outermost negative electrode plate 30 includes a second terminating end 33, the second terminating end 33 being disposed on the second main plane 12.

The first terminating end 23 terminates on the first main plane 11 and the second terminating end 33 terminates on the second main plane 12, allowing the first terminating end 23 and the second terminating end 33 to terminate on different side surfaces of the battery cell 100. When the first main plane 11 and/or the second main plane 12 is prone to abuse of a mechanical external force such as needle puncture, a short circuit preferentially occurs to the corresponding first terminating end 23 and/or the second terminating end 33, so as to improve the safety of the first main plane 11 and the second main plane 12 of the battery cell 100. In some embodiments, the first terminating end 23 includes a first segment 231 and a second segment 232. In a winding direction of the first terminating end 23, the second segment 232 is disposed at an outer end of the first segment 231. The first segment 231 is disposed on the second main plane 12, and the second segment 232 is wound to the first main plane 11 after bypassing a corner of the battery cell 100. The inner side of the positive electrode current collector 21 corresponding to the first segment 231 is coated with the positive electrode active material layer 22, such that the first segment 231 and the negative electrode plate 30 surrounded by it have capacity performance, thus increasing the energy density of the battery cell 100.

A positive electrode current collector 21 corresponding to the second segment 232 is uncoated with the positive electrode active material layer 22. Compared with the short circuit occurring between the positive electrode plate 20 and the negative electrode plate 30, the short circuit occurring to the positive electrode current collector 21 and/or the negative electrode current collector 31 is relatively safe. Therefore, the positive electrode current collector 21 corresponding to the second segment 232 is uncoated with the positive electrode active material layer 22, such that the short circuit occurs to the positive electrode current collector 21 when the battery cell 100 is prone to abuse of a mechanical external force such as needle puncture. For example, a short circuit occurs to the second segment 232 and an electrode plate at the inner circle of the outermost electrode plate 10b, or a short circuit occurs to the second segment 232 and the metal layer in the packaging bag 50. In addition, the short-circuit position is in the outermost electrode plate 10b of the battery cell 100 rather than in the battery cell 100, which facilitates heat dissipation and avoids combustion or explosion of the battery cell 100, thus improving the safety of the battery cell 100.

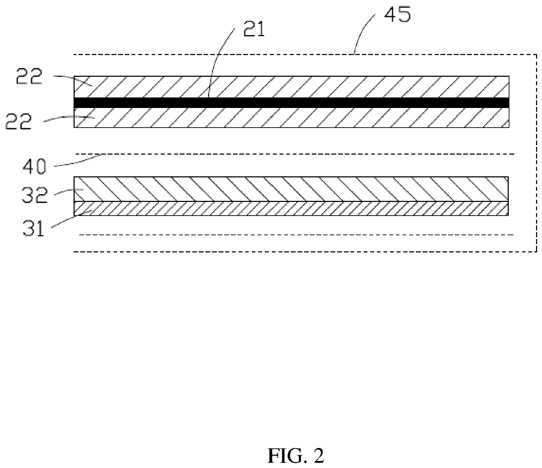

Referring to FIGs. 1 and 2, in some embodiments, both sides of the positive electrode current collector 21 corresponding to the first segment 231 are coated with the positive electrode active material layer 22. A positive electrode current collector 21 corresponding to the second segment 232 is uncoated with the positive electrode active material layer 22.

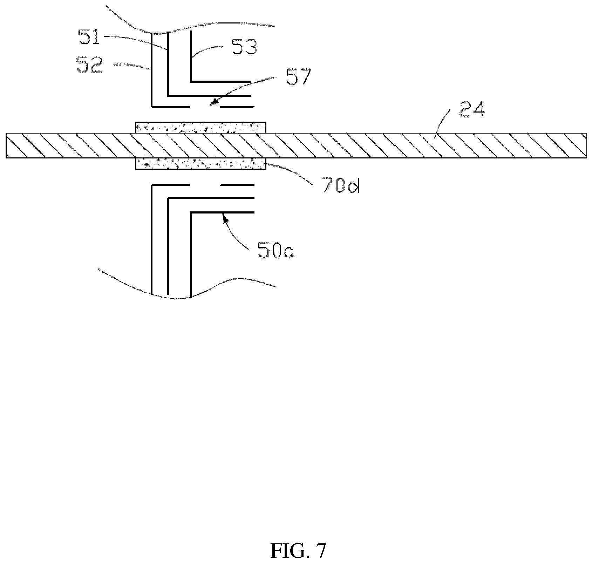

In some embodiments, only the inner side of the positive electrode current collector 21 corresponding to the first segment 231 is coated with the positive electrode active material layer 22 (referring to FIG. 7), and both sides of the positive electrode current collector 21 connected to an inner end (that is, an end of the first segment 231 away from the second segment 232) of the first segment 231 are coated with the positive electrode active material layer 22. A positive electrode current collector 21 corresponding to the second segment 232 is uncoated with the positive electrode active material layer 22.

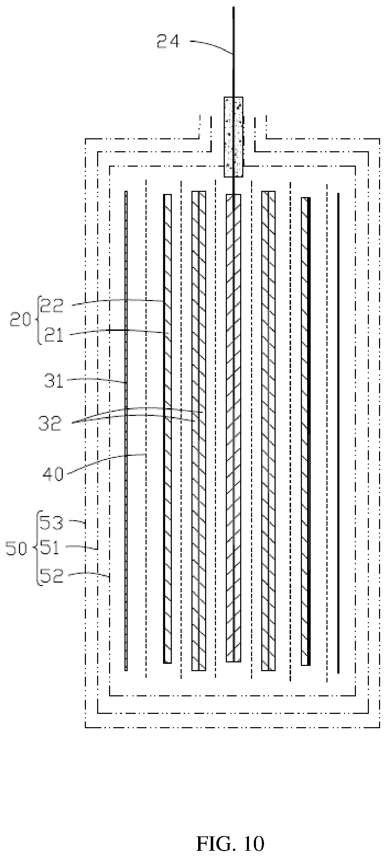

In some embodiments, the positive electrode current collector 21 corresponding to the first segment 231 transits from a current collector with both sides coated with the positive electrode active material layer 22 to a current collector with only the inner side coated with the positive electrode active material layer 22 (referring to FIG. 10), and the positive electrode current collector 21 with the inner side coated with the positive electrode active material layer 22 surrounds at least half circle of the battery cell 100. A positive electrode current collector 21 corresponding to the second segment 232 is uncoated with the positive electrode active material layer 22.

In some embodiments, an occupation area proportion of the second segment 232 on the first main plane 11 is greater than 0% and small than or equal to 100%. In some specific embodiments, the area proportion of the second segment 232 occupying the first main plane 11 is one of 10%, 20%, 30%, 40%, 50%, 60%, 70%, 80%, 90%, or the like.

Still referring to FIG. 1, the outer side of the negative electrode current collector 31 corresponding to the second terminating end 33 is uncoated with the negative electrode active material layer 32, allowing the short circuit to occur to the negative electrode current collector 31 at the outer circle of the second segment 232 when the battery cell 100 is prone to the abuse of a mechanical external force such as needle puncture, thus improving the safety of the battery cell 100. In addition, the negative electrode current collector 31 corresponding to the negative electrode plate 30 surrounded by the second segment 232 bypassing the corner of the battery cell 100 allows for one more opportunity of a safe short circuit between the positive electrode current collector 21 and the negative electrode current collector 31 at the corner of the battery cell 100, thus improving the safety of the battery cell 100.

It can be understood that the positive electrode current collector 21, in the positive electrode plate 20, with the outer side coated with the positive electrode active material layer 22 is surrounded outwards by the negative electrode plate 30, and the inner side of the negative electrode current collector 31 corresponding to the negative electrode plate 30 is coated with the negative electrode active material layer 32, allowing for the positive electrode current collector 21 coated with the positive electrode active material layer 22 and the negative electrode plate 30 surrounding it to have capacity performance, thus increasing the energy density of the battery cell 100.

Referring to FIGs. 1 and 2, in some embodiments, only the inner side of the negative electrode current collector 31 corresponding to the second terminating end 33 is coated with the negative electrode active material layer 32, and the negative electrode current collector 31 surrounds at least one cycle of the positive electrode current collector 21, corresponding to the first terminating end 23, with both sides coated with the positive electrode active material layer 22. Both sides of the negative electrode current collector 31 connected to an inner end of the second terminating end 33 are coated with the negative electrode active material layer 32.

In some embodiments, neither side of the negative electrode current collector 31 corresponding to the second terminating end 33 is coated with the negative electrode active material layer 32, and the negative electrode current collector 31 surrounds at least one cycle of the positive electrode current collector 21, corresponding to the first terminating end 23, with one side coated with the positive electrode active material layer 22 (referring to FIG. 7). Both sides of the negative electrode current collector 31 connected to an inner end of the second terminating end 33 are coated with the negative electrode active material layer 32.

In some embodiments, the negative electrode current collector 31 corresponding to the second terminating end 33 transits from a current collector with the inner side coated with the negative electrode active material layer 32 to a current collector with neither side coated with the negative electrode active material layer 32, and the negative electrode current collector 31 with neither side coated with the negative electrode active material layer 32 surrounds at least half circle of the positive electrode current collector 21, corresponding to the first terminating end 23, with one side coated with the positive electrode active material layer 22 (referring to FIG. 10). Both sides of the negative electrode current collector 31 connected to an inner end of the second terminating end 33 are coated with the negative electrode active material layer 32.

Referring to FIGs. 1 and 2, in some embodiments, the battery cell 100 further includes a second separator 45. The second separator 45 covers an end portion of the second terminating end 33 and is configured to improve the safety of the end portion of the second terminating end 33. The end portion of the second terminating end 33 is a portion where a cut surface of the outermost negative electrode plate 30 is located. In some specific embodiments, the second separator 45 covers both the end portion of the second terminating end 33 and an end portion of the first segment 231 on the second main plane 12.

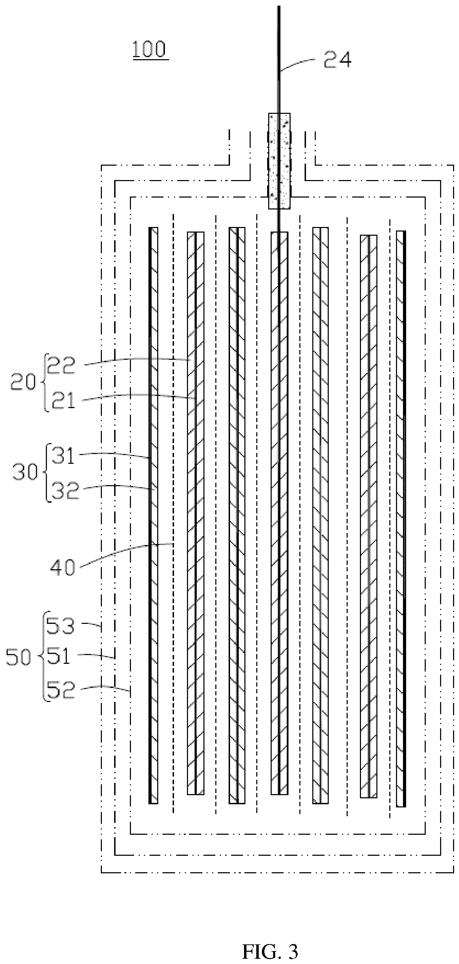

Referring to FIG. 3, the battery cell 100 further includes a positive electrode tab 24 disposed on the positive electrode plate 20 and a negative electrode tab 34 disposed on the negative electrode plate 30. The packaging bag 50 includes a fusion layer 52, a metal layer 51, and a protective layer 53 stacked sequentially. The fusion layer 52 is disposed on an inner side surface of the metal layer 51 and configured to be melted by heat to seal the packaging bag 50. The protective layer 53 is disposed on an outer side surface of the metal layer 51 and configured to enhance the structural strength of the packaging bag 50, avoiding the damage to the electrode assembly 10 due to breakage of the packaging bag 50.

The packaging bag 50 is provided with a sealing portion 50a, and the positive electrode tab 24 is electrically connected to the metal layer 51 and extends from the sealing portion 50a, so as to improve the sealing performance of the packaging bag 50. Specifically, the sealing portion 50a is formed through extension of the fusion layer 52, the metal layer 51, and the protective layer 53 along the extension direction of the tab.

The positive electrode tab 24 being electrically connected to the metal layer 51 allows the short circuit to occur preferentially to the metal layer 51 in the packaging bag 50 and the positive electrode current collector 21 when the battery cell 100 is prone to abuse of a mechanical external force such as needle puncture. In addition, the short-circuit position is in the packaging bag 50 at the outermost side of the battery cell 100 rather than in the battery cell 100. This facilitates heat dissipation and avoids combustion or explosion of the battery cell 100, thus improving the safety of the battery cell 100.

In some embodiments, the packaging bag 50 further includes a bonding layer, where the bonding layer is disposed between the fusion layer 52 and the metal layer 51 and between the metal layer 51 and the protective layer 53 and configured to improve the stability of connection between the fusion layer 52, the metal layer 51, and the protective layer 53, improving the structural strength of the packaging bag 50.

In some embodiments, the metal layer 51 is made of aluminum or stainless steel, the fusion layer 52 is made of polyethylene plastic, and the protective layer 53 is made of nylon or polyester resin.

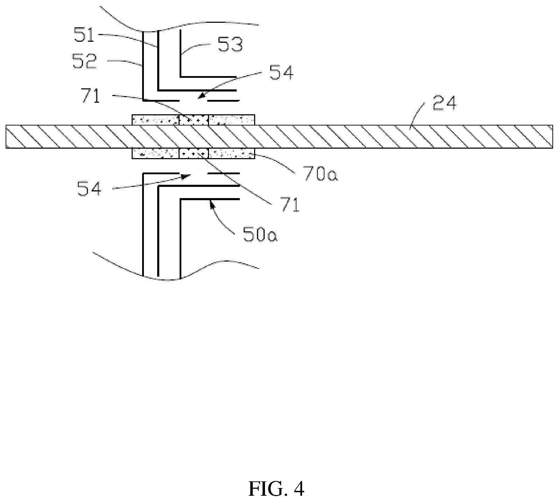

Referring to FIG. 4, the fusion layer 52 in the sealing portion 50a is provided with a through hole 54, and the positive electrode tab 24 is electrically connected to the metal layer 51 via the through hole 54. In addition, the battery cell 100 further includes a tab adhesive layer 70 for the positive electrode tab 24 to penetrate through, and the tab adhesive layer 70 is partially disposed in the sealing portion 50a and configured to further improve the sealing performance of the packaging bag 50.

In different embodiments, the tab adhesive layer 70 is of a different structure. To distinguish different tab adhesive layers 70 in different embodiments, the tab adhesive layers 70 in different embodiments are respectively defined as a tab adhesive layer 70a, a tab adhesive layer 70b, and a tab adhesive layer 70c.

Still referring to FIG. 4, in some embodiments, the tab adhesive layer 70a covers a portion of the positive electrode tab 24 in the sealing portion 50a. The tab adhesive layer 70a is provided with a melting portion 71 corresponding to the through hole 54, the melting portion 71 is configured to melt synchronously with the fusion layer 52, so as to expose the positive electrode tab 24 in the melting portion 71, and the positive electrode tab 24 runs through the through hole 54 to be electrically connected to the metal layer 51.

In the foregoing battery cell 100, as the tab adhesive layer 70a is melted and combined with the fusion layer 52 and the melting portion 71 is disposed on the tab adhesive layer 70a, allowing the melting portion 71 to melt synchronously with the fusion layer 52, thus improving the sealing performance of the battery cell 100. The exposed positive electrode tab 24 being electrically connected to the metal layer 51 via the through hole 54 allows the short circuit to preferentially occur to the metal layer 51 and the positive electrode current collector 21 when the battery cell 100 is prone to abuse of a mechanical external force such as needle puncture, thus improving the safety of the battery cell 100.

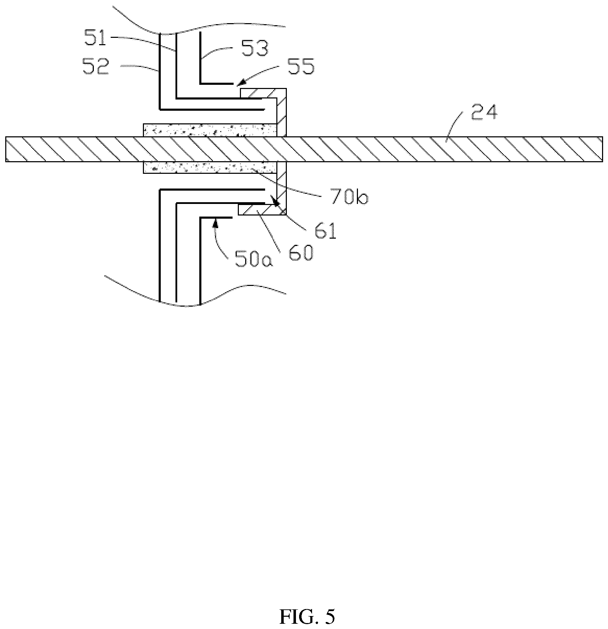

Referring to FIG. 5, in some embodiments, the tab adhesive layer 70b covers a portion of the positive electrode tab 24 in the sealing portion 50a. The tab adhesive layer 70b is provided with a conductive portion 72 corresponding to the through hole 54, the conductive portion 72 runs through the through hole 54 and abuts against the metal layer 51, and the positive electrode tab 24 is electrically connected to the metal layer 51 via the conductive portion 72.

In the foregoing battery cell 100, the tab adhesive layer 70b being melted and combined with the fusion layer 52 improves the sealing performance of the battery cell 100. As the conductive portion 72 is disposed on the tab adhesive layer 70b, and the conductive portion 72 runs through the through hole 54 and abuts against the metal layer 51, the positive electrode tab 24 is electrically connected to the metal layer 51, allowing the short circuit to preferentially occur to the metal layer 51 and the positive electrode current collector 21 when the battery cell 100 is prone to abuse of a mechanical external force such as needle puncture, thus improving the safety of the battery cell 100.

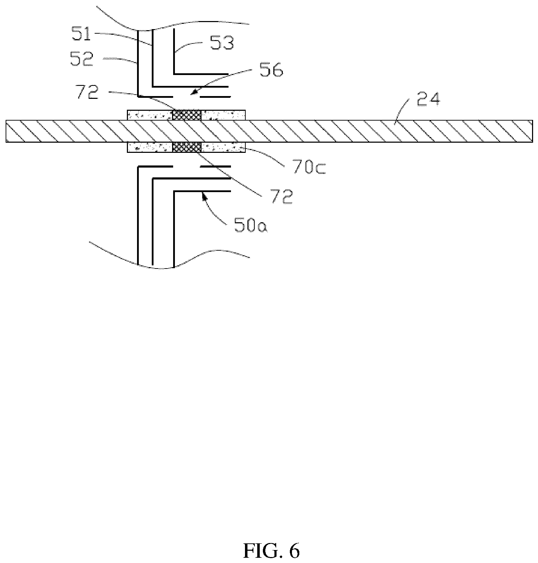

Referring to FIG. 6, in some embodiments, the tab adhesive layer 70c covers a portion of the positive electrode tab 24 in the sealing portion 50a. The tab adhesive layer 70c is a conductive adhesive layer, and a portion of the tab adhesive layer 70c corresponding to the through hole 54 runs through the through hole 54 and abuts against the metal layer 51 so as to be electrically connected to the metal layer 51.

In the foregoing battery cell 100, the tab adhesive layer 70c being melted and combined with the fusion layer 52 improves the sealing performance of the battery cell 100. As the portion of the tab adhesive layer 70c corresponding to the through hole 54 runs through the through hole 54 and abuts against the metal layer 51, the tab adhesive layer 70c made of a conductive adhesive enables the positive electrode tab 24 to be electrically connected to the metal layer 51. This allows the short circuit to preferentially occur to the metal layer 51 and the positive electrode current collector 21 when the battery cell 100 is prone to abuse of a mechanical external force such as needle puncture, thus improving the safety of the battery cell 100.

Referring to FIG. 7, in some embodiments, the battery cell 100 further includes a conductive member 60. The protective layer 53 is provided with a depression 55 exposing the metal layer 51. A first end of the conductive member 60 is electrically connected to the metal layer 51 at the depression 55, and a second end of the conductive member 60 is electrically connected to the positive electrode tab 24 outside the packaging bag 50.

In some specific embodiments, a sleeve groove 61 is provided on a side of the conductive member 60 facing the sealing portion 50a, and the conductive member 60 sleeves an end portion of the sealing portion 50a via the sleeve groove 61. The central position of the conductive member 60 (that is, the second end of the conductive member 60) is for the positive electrode tab 24 to pass through, thus allowing the conductive member 60 to be electrically connected to the positive electrode tab 24. A circumferential side of the conductive member 60 (that is, the first end of the conductive member 60) penetrates through the depression 55 to abut against the metal layer 51 in the sealing portion 50a, thus allowing the conductive member 60 to be electrically connected to the metal layer 51.

In the foregoing battery cell 100, the conductive member 60 sleeves the end portion of the sealing portion 50a via the sleeve groove 61, thus improving the air tightness of the battery cell 100. As the conductive member 60 is electrically connected to both the positive electrode tab 24 and the metal layer 51, the positive electrode tab 24 is electrically connected to the metal layer 51, allowing the short circuit to preferentially occur to the metal layer 51 and the positive electrode current collector 21 when the battery cell 100 is prone to abuse of a mechanical external force such as needle puncture, thus improving the safety of the battery cell 100.

An embodiment of this application provides a battery (not shown), including a housing (not shown) and a battery cell 100 disposed in the housing, and the battery cell 100 may be any one of the battery cells in the foregoing embodiments.

In some embodiments, the battery further includes a circuit protection board (not shown). The circuit protection board is configured to monitor voltage, current, insulation status, state of charge, and the like of the battery cell 100 to provide safe management during charging and discharging of the battery, alarm and emergency protection for possible faults, and safety and optimization control for operation of the battery.

An embodiment of this application provides an electric device (not shown), including the battery according to any one of the foregoing embodiments.

The present invention is described below in detail using specific embodiments:

### Embodiment 1:

Referring to FIGs. 1, 2, and 3, a first terminating end 23 in this embodiment terminates on the first main plane 11 and a second terminating end 33 terminates on the second main plane 12. Both sides of a positive electrode current collector 21 corresponding to the first segment 231 are coated with the positive electrode active material layer 22. A positive electrode current collector 21 corresponding to the second segment 232 is uncoated with the positive electrode active material layer 22. An occupation area proportion of the second segment 232 on the first main plane 11 is greater than 0% and small than or equal to 100%. Only the inner side of the negative electrode current collector 31 corresponding to the second terminating end 33 is coated with the negative electrode active material layer 32, and the negative electrode current collector 31 surrounds at least one cycle of the positive electrode current collector 21, corresponding to the first terminating end 23, with both sides coated with the positive electrode active material layer 22. Both sides of the negative electrode current collector 31 connected to an inner end of the second terminating end 33 are coated with the negative electrode active material layer 32. The second separator 45 covers an end portion of the second terminating end 33.

### Embodiment 2:

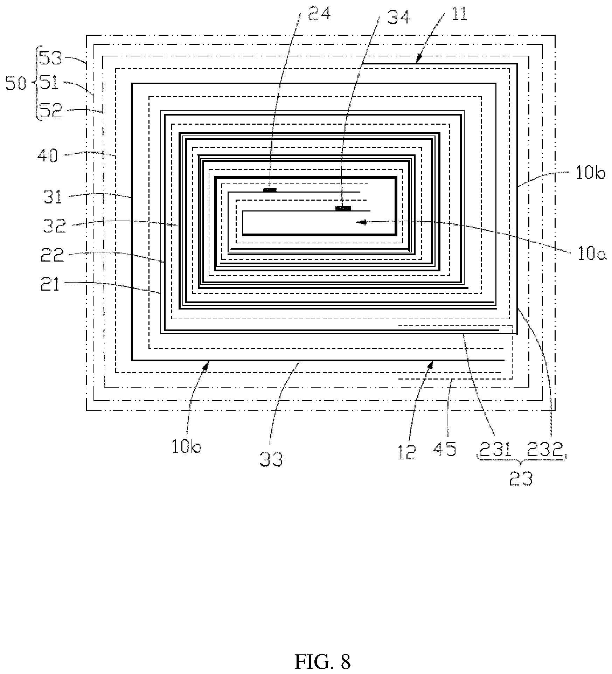

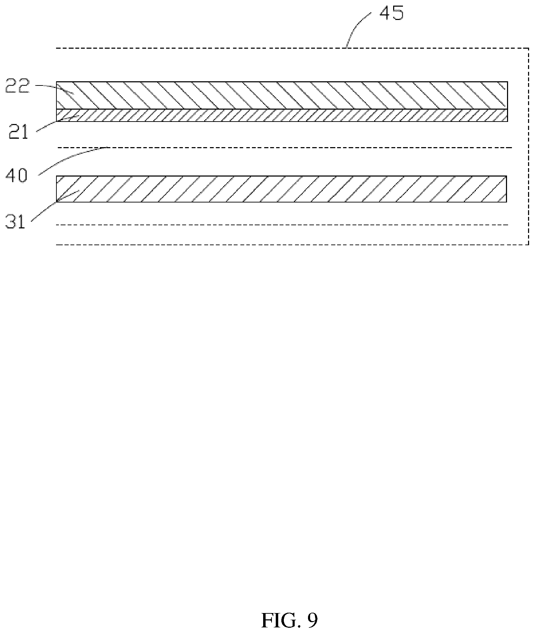

Referring to FIGs. 8, 9, and 10, a first terminating end 23 in this embodiment terminates on the first main plane 11 and a second terminating end 33 terminates on the second main plane 12. Only the inner side of the positive electrode current collector 21 corresponding to the first segment 231 is coated with the positive electrode active material layer 22, and both sides of the positive electrode current collector 21 connected to an inner end of the first segment 231 are coated with the positive electrode active material layer 22. A positive electrode current collector 21 corresponding to the second segment 232 is uncoated with the positive electrode active material layer 22. An occupation area proportion of the second segment 232 on the first main plane 11 is greater than 0% and small than or equal to 100%. Neither side of the negative electrode current collector 31 corresponding to the second terminating end 33 is coated with the negative electrode active material layer 32, and the negative electrode current collector 31 surrounds at least one cycle of the positive electrode current collector 21, corresponding to the first terminating end 23, with one side coated with the positive electrode active material layer 22. Both sides of the negative electrode current collector 31 connected to an inner end of the second terminating end 33 are coated with the negative electrode active material layer 32. The second separator 45 covers an end portion of the second terminating end 33.

### Embodiment 3

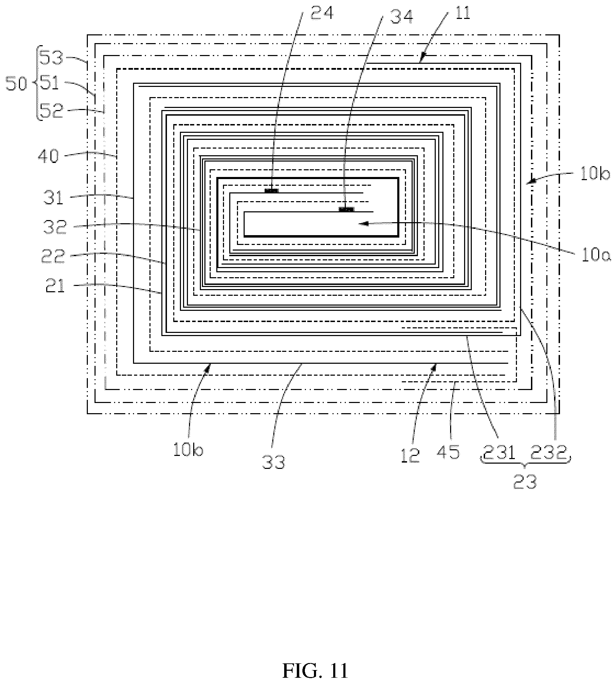

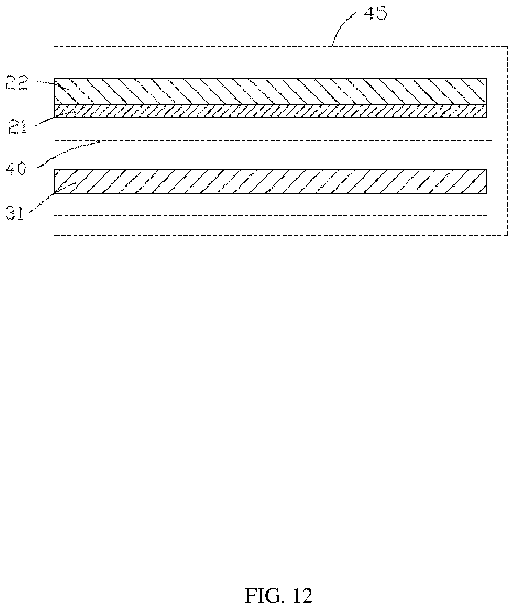

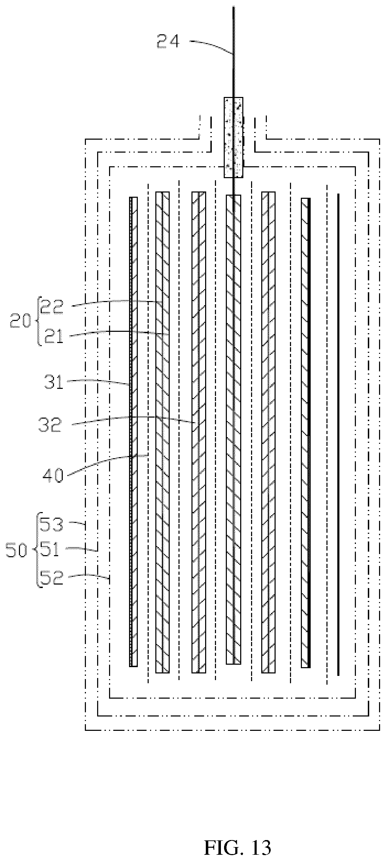

Referring to FIGs. 11, 12, and 13, a first terminating end 23 in this embodiment terminates on the first main plane 11 and a second terminating end 33 terminates on the second main plane 12. The positive electrode current collector 21 corresponding to the first segment 231 transits from a current collector with both sides coated with the positive electrode active material layer 22 to a current collector with only the inner side coated with the positive electrode active material layer 22 (referring to FIG. 7), and the positive electrode current collector 21 with the inner side coated with the positive electrode active material layer 22 surrounds at least half circle of the battery cell 100. A positive electrode current collector 21 corresponding to the second segment 232 is uncoated with the positive electrode active material layer 22. An occupation area proportion of the second segment 232 on the first main plane 11 is greater than 0% and small than or equal to 100%. The negative electrode current collector 31 corresponding to the second terminating end 33 transits from a current collector with the inner side coated with the negative electrode active material layer 32 to a current collector with neither side coated with the negative electrode active material layer 32, and the negative electrode current collector 31 with neither side coated with the negative electrode active material layer 32 surrounds at least half circle of the positive electrode current collector 21, corresponding to the first terminating end 23, with one side coated with the positive electrode active material layer 22. Both sides of the negative electrode current collector 31 connected to an inner end of the second terminating end 33 are coated with the negative electrode active material layer 32. The second separator 45 covers an end portion of the second terminating end 33.

In addition, those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

## Claims

1. A battery cell, comprising an electrode assembly and a packaging bag accommodating the electrode assembly, wherein the electrode assembly comprises a positive electrode plate, a first separator, and a negative electrode plate wound together, wherein the positive electrode plate comprises a positive electrode current collector and a positive electrode active material layer applied to the positive electrode current collector, the negative electrode plate comprises a negative electrode current collector and a negative electrode active material layer applied to the negative electrode current collector, a winding center of the electrode assembly points a direction outside the electrode assembly, an electrode plate with a periphery not covered by the positive electrode plate or the negative electrode plate is defined as an outermost electrode plate of the electrode assembly, and the outermost electrode plate comprises a positive electrode plate and a negative electrode plate.

2. The battery cell according to claim 1, wherein in a thickness direction of the electrode assembly, the electrode assembly comprises a first main plane and a second main plane disposed opposite each other, the outermost positive electrode plate comprises a first terminating end, the first terminating end is disposed on the first main plane, the outermost negative electrode plate comprises a second terminating end, and the second terminating end is disposed on the second main plane.

3. The battery cell according to claim 2, wherein the first terminating end comprises a first segment and a second segment, and in a winding direction of the first terminating end, the second segment is disposed at an outer end of the first segment; and
the first segment is disposed on the second main plane, the second segment is wound to the first main plane after bypassing a corner of the battery cell, an inner side of a positive electrode current collector corresponding to the first segment is coated with the positive electrode active material layer, and a positive electrode current collector corresponding to the second segment is uncoated with the positive electrode active material layer.

4. The battery cell according to claim 2, wherein an outer side of a negative electrode current collector corresponding to the second terminating end is uncoated with the negative electrode active material layer.

5. The battery cell according to claim 2, wherein the battery cell further comprises a second separator, and the second separator covers an end portion of the second terminating end.

6. The battery cell according to claim 1, wherein the battery cell further comprises a positive electrode tab disposed on the positive electrode plate;
the packaging bag comprises a fusion layer, a metal layer, and a protective layer stacked sequentially, wherein the fusion layer is disposed on an inner side surface of the metal layer and configured to be melted by heat to seal the packaging bag, and the protective layer is disposed on an outer side surface of the metal layer; and
the packaging bag is provided with a sealing portion, and the positive electrode tab is electrically connected to the metal layer and extends from the sealing portion.

7. The battery cell according to claim 6, wherein the fusion layer in the sealing portion is provided with a through hole, and the positive electrode tab is electrically connected to the metal layer via the through hole; and
the battery cell further comprises a tab adhesive layer for the positive electrode tab to penetrate through, and the tab adhesive layer is partially disposed in the sealing portion.

8. The battery cell according to claim 7, wherein the tab adhesive layer is provided with a melting portion corresponding to the through hole, the melting portion is configured to melt synchronously with the fusion layer, so as to expose the positive electrode tab in the melting portion, and the positive electrode tab runs through the through hole to be electrically connected to the metal layer.

9. The battery cell according to claim 7, wherein the tab adhesive layer is provided with a conductive portion corresponding to the through hole, and the conductive portion runs through the through hole and abuts against the metal layer to be electrically connected to the metal layer.

10. The battery cell according to claim 7, wherein the tab adhesive layer is a conductive adhesive layer, and a portion of the tab adhesive layer corresponding to the through hole runs through the through hole and abuts against the metal layer to be electrically connected to the metal layer.

11. The battery cell according to claim 6, wherein the battery cell further comprises a conductive member, the protective layer is provided with a depression exposing the metal layer, an end of the conductive member is electrically connected to the metal layer at the depression, and a second end of the conductive member is electrically connected to the positive electrode tab outside the packaging bag.

12. A battery, comprising a housing, wherein the battery further comprises the battery cell according to any one of claims 1 to 11, and the battery cell is disposed in the housing.

13. An electric device, comprising the battery according to claim 12.
